# EUROPEAN PATENT SPECIFICATION

(11) **EP 0 714 806 B1**
(45) Date of publication and mention of the grant of the patent: **26.01.2000**
(21) Application number: 95307787.2
(22) Date of filing: 01.11.1995
(51) Int. Cl.: B60N 2/28

(54) **Child safety seat for motor vehicles**
Kindersicherheitssitz für Kraftfahrzeuge
Siège de sécurité d'enfants pour des véhicules automobiles

(30) Priority: 29.11.1994 GB 9424050
(43) Date of publication of application: 05.06.1996
(73) Proprietor: BRITAX RÖMER Kindersicherheit GmbH, D-89024 Ulm (DE)
(72) Inventor: Czernakowski, Waldemar, D-89134 Blaustein (DE)
(74) Representative: Hollinghurst, Antony

(56) References cited:
- EP-A- 0 619 201
- EP-A- 0 619 202
- US-A- 5 181 765

## Description

This invention relates to a child safety seat, for use in a vehicle, of the type comprising a seat body and a releasable child restraint system for securing a child occupant in the seat, fastening means for the child restraint system, and releasable connectors for rigidly connecting the seat body to anchorage units on a motor vehicle. The child restraint system may be a harness.

It is well known for the coupling means of a seat of this type to comprise an adult seat belt, the child seat resting on the corresponding vehicle seat. The disadvantage of this arrangement is that, even if the adult belt is pulled very tight during installation, the resilience of both the vehicle seat and the adult belt, will permit undesirable movement of the child seat relative to the vehicle in the event of sudden deceleration, for example, during an accident. In order to overcome this disadvantage, it has been proposed to provide motor cars with anchorage units at agreed locations both in front of the seat and at the bottom of the backrest. In use, these anchorage units are engaged by releasable connectors which are rigidly coupled to a child seat, as in EP-A-0619201.

In order to ensure safe operation, it is necessary for all releasable connectors to be correctly fastened to their respective anchorage units. Experience has shown that one cannot trust adults installing child restraint systems to ensure that all such connectors are correctly fastened, particularly when the connectors are not easily accessible or are not perceived to be safety-relevant. In its broadest form, the invention aims to mitigate this problem by providing means for inhibiting the fastening of one of the more accessible and obviously safety-relevant connectors until after a less accessible and/or less obviously safety-relevant attachment has been fastened.

According to the invention, a child safety seat of the type described above has inhibiting means arranged to inhibit said fastening means prior to engagement of at least one of the releasable connectors with an anchorage unit.

If the releasable child restraint system includes a buckle, the inhibiting means may be arranged to inhibit fastening of said buckle prior to engagement of said releasable connector with a anchorage unit.

The inhibiting means may comprise a blocker adapted to cover an opening from which a tongue is to be inserted into the buckle.

The inhibiting means may be provided with associated indicator means for providing a visual indication whether the releasable connector is in engagement with a anchorage unit.

In one form of the invention, the harness buckle is arranged to receive two tongues and separate inhibiting means, each associated with a respective releasable connector is arranged to inhibit engagement of each tongue.

Embodiments of the invention will now be described, by way of example, with reference to the accompanying drawings, in which:
Figure 1 is a perspective view of a vehicle seat equipped with anchorage units of the type described above;
Figure 2 is a perspective view of a child safety seat suitable for mounting on the anchorage units shown in Figure 1;
Figure 3 is a schematic cross-sectional view of the buckle and one of the releasable connectors of the seat shown in Figure 2, with the releasable connector disengaged from the corresponding anchorage unit;
Figure 4 is a schematic cross-sectional view, similar to Figure 3, showing the releasable connector engaged with the corresponding anchorage unit and a tongue engaged with the harness buckle;
Figure 5 is a partially broken-away scrap plan view corresponding to Figure 3, showing the inhibiting and indicator means associated with the harness buckle; and
Figure 6 is a sectional view, similar to Figures 3 and 4, showing the releasable connector immediately after disengagement from the corresponding anchorage unit.

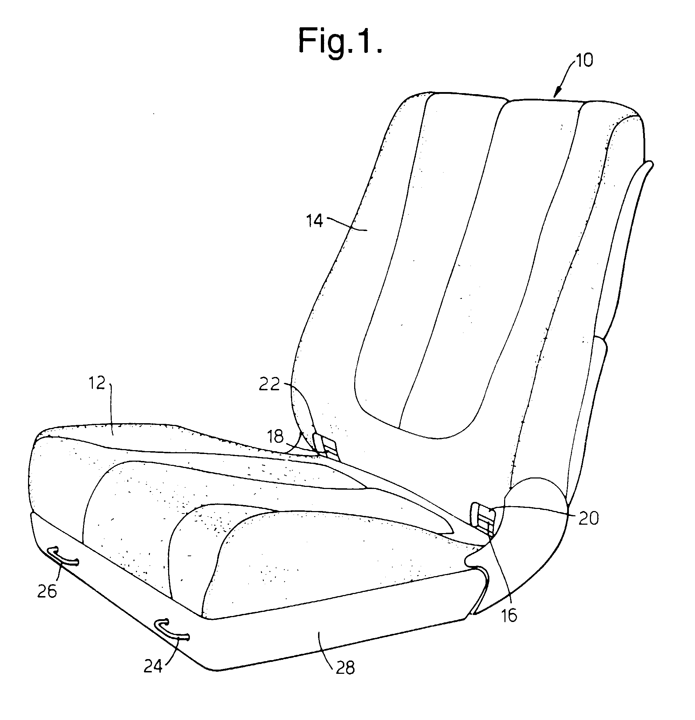

Figure 1 shows a vehicle seat 10 equipped with two front anchorage units and two rear anchorage units of the type described above. The seat comprises a seat portion 12 and a backrest 14. The rear anchorage units comprise transversely extending rods 16 and 18 which are accessible through openings 20 and 22 in the bottom of the backrest and which are rigidly secured to the frame (not shown) of the seat 10. The front anchorage units comprise U-shaped rods 24 and 26 which have the ends of their limbs secured to the front edge of a base portion 28 of the seat portion 12.

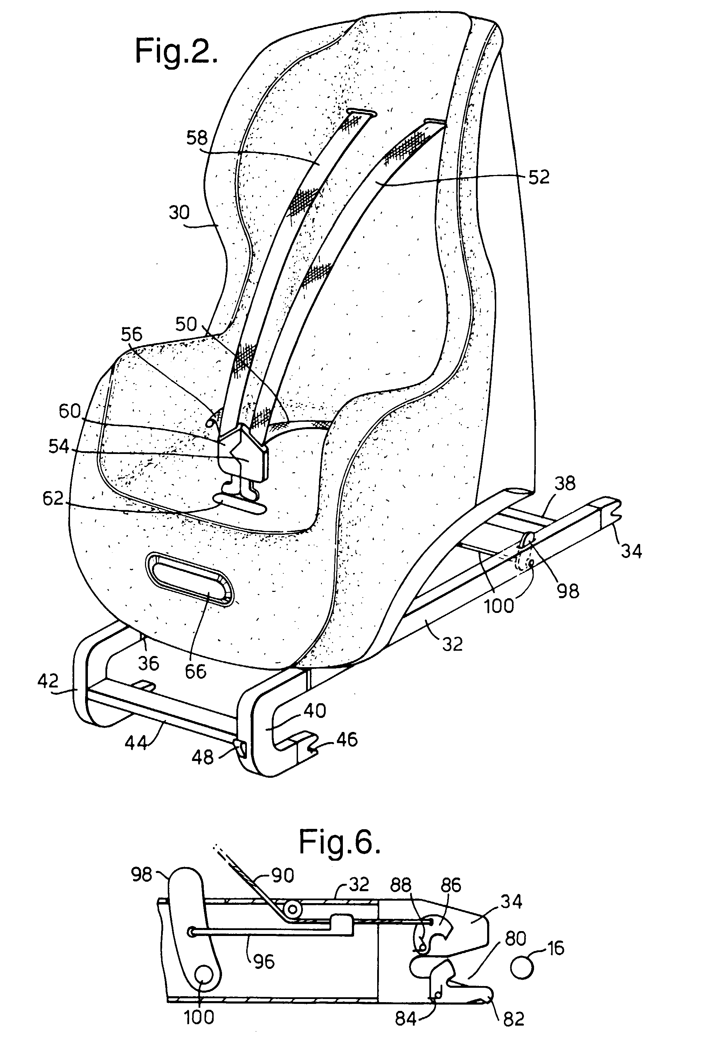

Referring to Figure 2, a child safety seat suitable for mounting on the vehicle seat 10 shown in Figure 1, has a seat body 30 and a horizontal support member 32 projecting from the rear end close to the left hand side thereof, from the point of view of a seat occupant. A rear releasable connector 34 is mounted on the rear end of the support member 32 rear end for engagement with the rear anchorage unit 16 on the left hand side of the seat 10. A similar rear releasable connector (not shown), for engagement with the rear anchorage unit 18 on the right hand side of the seat 10, is mounted on a second horizontal support member 36 which projects from the rear end close to the right hand side of the seat body 30. In front of the rear releasable connectors, the two horizontal support members 32 and 36 are linked by a transverse member 38.

Each of horizontal support members 32 and 36 receives one limb of a respective U-shaped member 40, 42 for relative sliding movement. The two U-shaped members 40 and 42 are interconnected by transverse member 44. The other limb of the right hand U-shaped member 40 carries a releasable connector 46, with a manually operable release lever 48, for engagement with the left hand front anchorage unit 24. The other U-shaped member 42 merely has a horizontal slot, which is open at its rear end and is arranged to engage above and below the right hand front anchorage unit 26.

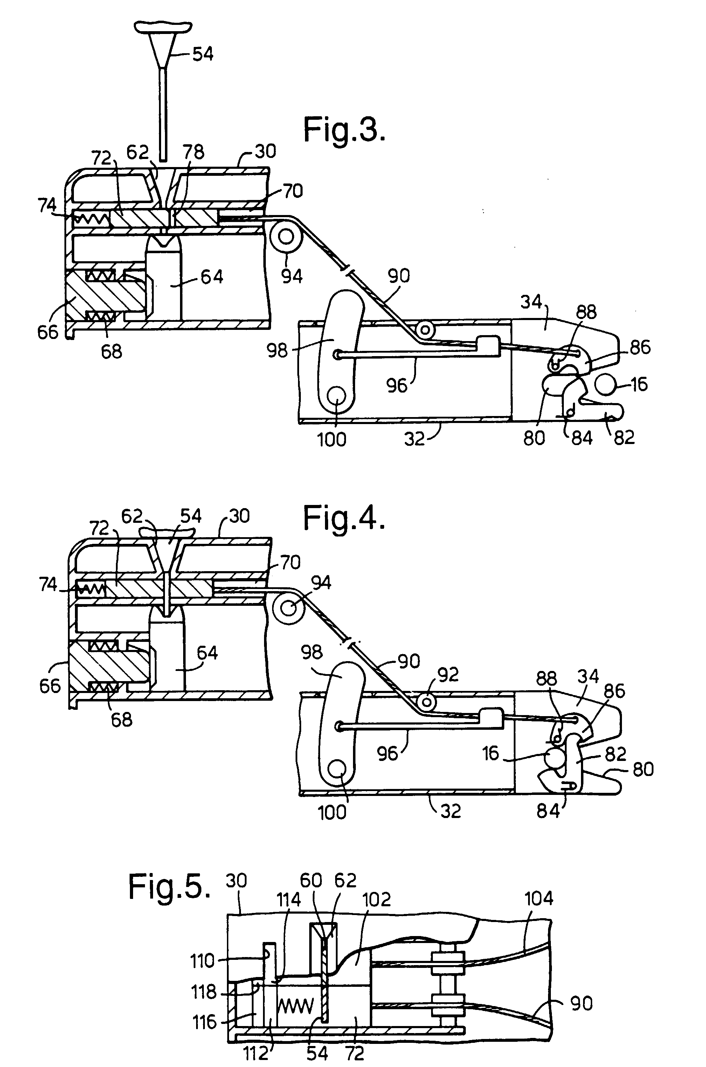

The seat body 30 is equipped with a harness comprising left hand lap and shoulder straps 50 and 52 connected to a left hand tongue 54, and right hand lap and shoulder straps 56 and 58 connected to a right hand tongue 60. The tongues 54 and 60 can be inserted through a slot 62 in the seat body 30 so as to engage with a buckle 64 (Figure 3) which is releasable by depression of a push button 66.

Referring now more particularly to Figure 3, the push button 66 is biassed outwardly by a compression spring 68. The buckle 64 may be as described in EP-A-0436294. Between the slot 62 and the buckle 64, the seat body 30 contains a horizontal guide channel 70 containing a sliding blocker 72 which is pulled towards the front end of the channel 70 by a tension spring 74.

Figure 3 also shows the releasable connector 34 at the rear end of the horizontal member 32. This comprises a slot 80 for receiving the rear anchorage unit, a pivotally mounted L-shaped latch plate 82 which is biassed in the clockwise direction (as viewed in Figure 3) by a spring 84, and a pivotally mounted catch plate 86 which is biassed in the clockwise direction by a spring 88. The catch plate 86 is connected by a cable 90 which runs over pulleys 92 and 94 to the rear end of the blocker 72. The cable 90 is also connected by a link 96 to a release lever 98, the free end of which projects above the horizontal member 32. The release lever 98 is mounted fast with a shaft 100 which extends between the horizontal members 32 and 36, and has the equivalent release lever of the other rear releasable connector (not shown) mounted fast with its other end.

When the releasable connector 34 is its disengaged position, as shown in Figure 3, the cable 90 pulls the blocker 72 to the right against the action of the tension spring 74 so that the slot 78 therein is not aligned with the slot 62 and the buckle 64. When the child seat is to be installed in the vehicle, the rear releasable connector 34 is positioned in alignment with the rear anchorage unit 16 and the rear releasable connector on the other side of the seat is similarly aligned with the anchorage unit 18. As the rear releasable connector 34 is pushed rearwardly, the anchorage unit 16 causes counter-clockwise rotation of the latch plate 82 until its longer limb is engaged by the catch plate 86, as shown in Figure 4. The resulting movement of the catch plate 86 slackens the cable 90, allowing the tension spring 74 to pull the slot 78 in the blocker 72 into alignment with the slot 62 and the buckle 64, permitting the tongue 54 to be inserted. The rear releasable connector on the other horizontal member 36 is connected to a similar blocker 102 in the channel 70 by a cable 104 (Figure 5), thus permitting insertion of the other tongue 60. The harness is therefore properly fastened. It can be released by depressing the push button 66. Both rear releasable connectors can be disengaged by pulling on the lever 98, as shown in Figure 6.

Referring again to Figure 5, the surface of the seat body 30 has a window 110 immediately in front of the slot 62 therein. The top surface of each of the blockers 72 and 102 has a green coloured zone 112, 114 which is visible through the window 110 when such blocker 72, 102 is in the position illustrated in Figure 4, thus indicating that the corresponding rear releasable connector is in its engaged condition. The top surface of each of the blockers 72 and 102 also has a red coloured zone 116, 118, immediately in front of its green coloured zone 112, 114, which is visible through the window 110 when such blocker 72, 102 is in the position illustrated in Figure 3, indicating that the corresponding rear releasable connector is in its disengaged condition.

The front releasable connector 46 is of similar construction to the rear releasable connector 34, its catch plate being coupled by a link to the release lever 48.

## Claims

1. A child safety seat, for use in a vehicle, comprising a seat body (30), a releasable child restraint system (50-60) for securing a child occupant in the seat, fastening means (64) for the child restraint system (50-60), and releasable connectors (34, 46) for rigidly connecting the seat body (30) to respective anchorage units (20-26) on a motor vehicle, characterised by inhibiting means (72, 102) arranged to inhibit said fastening means (64) prior to engagement of at least one of the releasable connectors (34) with an anchorage unit (20, 22).

2. A child safety seat according to claim 1, wherein the inhibiting means (72, 102) is provided with associated indicator means (112-118) for providing a visual indication whether the releasable connector is in engagement with a anchorage unit.

3. A child safety seat according to claim 1 or 2, wherein the fastening means for the child restraint system comprises a buckle (64) and the inhibiting means (72, 102) is arranged to inhibit fastening of said buckle (64) prior to engagement of said releasable connector (34) with a anchorage unit (20, 22).

4. A child safety seat according to claim 3, wherein the inhibiting means comprises a blocker (72, 102) adapted to cover an opening (62) through which a tongue (54, 60) is to be inserted into the buckle (64).

5. A child safety seat according to claim 3 or 4, wherein the buckle (64) is arranged to receive two tongues (54, 60) and separate inhibiting means (72, 102), each associated with a respective releasable connector is arranged to inhibit engagement of a respective tongue.

## Patentansprüche

1. Ein Kindersicherheitssitz zur Verwendung in einem Fahrzeug, aufweisend: einen Sitzkörper (30), ein lösbares Kinderhaltesystem (50-60) zum Befestigen eines Kindes als Insasse des Sitzes, eine Befestigungseinrichtung (64) für das Kinderhaltesystem (50-60) und lösbare Verbinder (34, 46) zum starren Verbinden des Sitzkörpers (30) mit entsprechenden Verankerungseinheiten (20-26) an einem Motorfahrzeug, **gekennzeichnet durch** eine Hemmeinrichtung (72, 102), welche so angeordnet ist, um vor einem Ineingriffkommen von wenigstens einem der lösbaren Verbinder (34) mit einer Verankerungseinheit (20, 22) die genannte Befestigungseinrichtung (64) zu hemmen.

2. Ein Kindersicherheitsitz nach Anspruch 1, bei welchem die Hemmeinrichtung (72, 102) mit einer zugeordneten Anzeigeeinrichtung (112-118) zum Liefern einer visuellen Anzeige versehen ist, ob der lösbare Verbinder in Eingriff mit einer Verankerungseinheit ist.

3. Ein Kindersicherheitssitz nach Anspruch 1 oder 2, bei welchen die Befestigungseinrichtung für das Kinderhaltesystem eine Schnalle (64) aufweist und die Hemmeinrichtung (72, 102) so angeordnet ist, um vor dem Ineingriffkommen des genannten lösbaren Verbinders (34) mit einer Verankerungseinheit (20, 22) ein Befestigen der genannten Schnalle (64) zu hemmen.

4. Ein Kindersicherheitssitz nach Anspruch 3, bei welchem die Hemmeinrichtung einen Sperrer (72, 102) aufweist, der dazu befähigt ist, eine Öffnung (62) abzudecken, durch welche eine Zunge (54, 60) in die Schnalle (64) einzusetzen ist.

5. Ein Kindersicherheitssitz nach Anspruch 3 oder 4, bei welchem die Schnalle (64) so angeordnet ist, um zwei Zungen (54, 60) aufzunehmen, und getrennte Hemmeinrichtungen (72, 102), von denen jede mit einem entsprechenden lösbaren Verbinder verbunden ist, so angeordnet sind, um einen Eingriff einer entsprechenden Zunge zu hemmen.

## Revendications

1. Siège de sécurité pour enfant, destiné à être utilisé dans un véhicule, comprenant un corps de siège (30), un système de retenue pour enfant (50-60) pour attacher un enfant dans le siège, un moyen d'attache (64) pour le système de retenue pour enfant (50-60), et des connecteurs détachables (34, 36) pour connecter rigidement le corps de siège (30) à des unités d'ancrage respectives (20-26) sur un véhicule à moteur, caractérisé par un moyen inhibiteur (72, 102) prévu pour inhiber ledit moyen d'attache (64) avant l'engagement d'au moins l'un des connecteurs détachables (34) avec une unité d'ancrage (20, 22).

2. Siège de sécurité pour enfant selon la revendication 1, dans lequel le moyen inhibiteur (72, 102) est pourvu de moyens indicateurs associés (112-118) pour fournir une indication visuelle de l'engagement ou non du connecteur détachable avec une unité d'ancrage.

3. Siège de sécurité pour enfant selon la revendication 1 ou 2, dans lequel le moyen d'attache pour le système de retenue pour enfant comprend une boucle (64) et le moyen inhibiteur (72, 102) est prévu pour inhiber l'attache de ladite boucle (64) avant l'engagement dudit connecteur détachable (34) avec une unité d'ancrage (20, 22).

4. Siège de sécurité pour enfant selon la revendication 3, dans lequel le moyen inhibiteur comprend un élément de blocage (72, 102) adapté pour couvrir une ouverture (62) à travers laquelle une languette (54, 60) doit être insérée dans la boucle (64).

5. Siège de sécurité pour enfant selon la revendication 3 ou 4, dans lequel la boucle (64) est prévue pour recevoir deux languettes (54, 60) et des moyens inhibiteurs séparés (72, 102), chacun étant associé à un connecteur détachable respectif et arrangé pour inhiber l'engagement d'une langue respective.
